(19) Europäisches Patentamt
European Patent Office
Office européen des brevets

(11) **EP 2 038 517 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **07765390.5**

(22) Anmeldetag: **13.06.2007**

(51) Int Cl.:
*F01D 21/12* (2006.01)   *F01D 21/14* (2006.01)
*F02C 9/20* (2006.01)   *F01D 17/16* (2006.01)
*F02C 3/30* (2006.01)   *F02C 7/143* (2006.01)

(86) Internationale Anmeldenummer:
**PCT/EP2007/055813**

(87) Internationale Veröffentlichungsnummer:
**WO 2008/003571 (10.01.2008 Gazette 2008/02)**

(54) **VERFAHREN ZUM BETRIEB EINER GASTURBINE SOWIE GASTURBINE ZUR DURCHFÜHRUNG DES VERFAHRENS**

METHOD FOR OPERATING A GAS TURBINE AND GAS TURBINE FOR CARRYING OUT SAID METHOD

PROCÉDÉ POUR FAIRE FONCTIONNER UNE TURBINE À GAZ ET TURBINE À GAZ PERMETTANT LA MISE EN OEUVRE DU PROCÉDÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.07.2006 CH 10872006**

(43) Veröffentlichungstag der Anmeldung:
**25.03.2009 Patentblatt 2009/13**

(73) Patentinhaber: **ALSTOM Technology Ltd**
**5400 Baden (CH)**

(72) Erfinder:
• **NEMET, Anton, Dr.**
**5415 Nussbaumen (CH)**
• **ZHANG, Xiao-Yi, Dr.**
**5442 Fislisbach (CH)**

(74) Vertreter: **Bernotti, Andrea et al**
**Studio Torta S.p.A.**
**Via Viotti, 9**
**10121 Torino (IT)**

(56) Entgegenhaltungen:
**EP-A1- 0 903 469     EP-B1- 0 620 362**
**US-A1- 2005 131 616**

**Beschreibung**

TECHNISCHES GEBIET

Die vorliegende Erfindung bezieht sich auf das Gebiet der Technik von Gasturbinenanlagen. Sie betrifft ein Verfahren zum Betrieb einer Gasturbine gemäss dem Oberbegriff des Anspruchs 1 sowie eine Gasturbine zur Durchführung des Verfahrens.

STAND DER TECHNIK

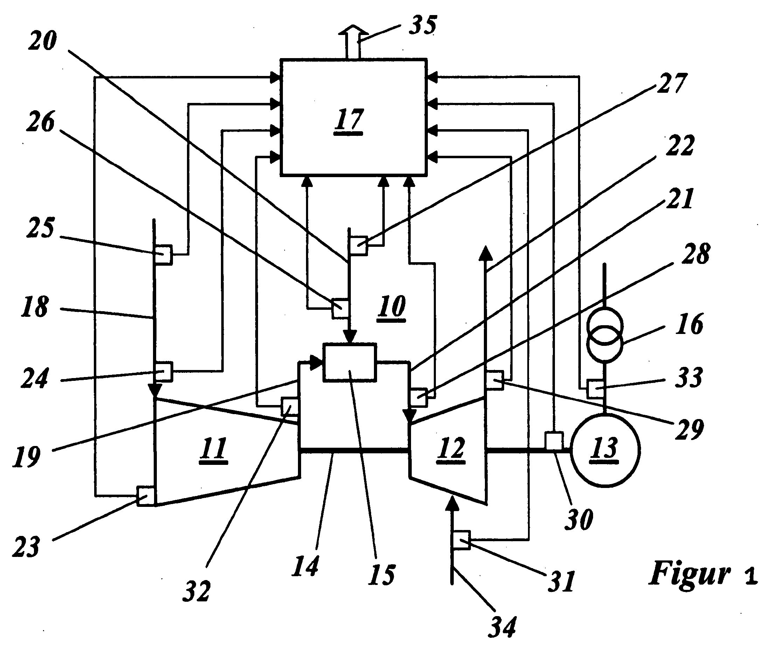

Eine Gasturbinenanlage zur Erzeugung elektrischer Leistung umfasst üblicherweise gemäss Fig. 1 einen Verdichter 11, der über einen Verdichtereinlass 18 Luft aus der Umgebung ansaugt, diese verdichtet, und die verdichtete Luft über einen Verdichterauslass 19 an eine nachfolgende Brennkammer 15 abgibt, wo sie zum Verbrennen eines durch eine Brennstoffzufuhr 20 herangeführten flüssigen oder gasförmigen Brennstoffs eingesetzt wird. Das bei der Verbrennung entstehende Heissgas wird über einen Turbineneinlass 21 in eine nachgeschaltete Turbine 12 gegeben, wo es unter Arbeitsleistung entspannt wird. Das entspannte Gas wird an einem Turbinenauslass 22 als Abgas abgegeben. Die Turbine 12 treibt über eine gemeinsame Welle 14 sowohl den Verdichter 11 als auch einen Generator 13 an, an dessen Klemmen eine elektrische Leistung abgenommen und über einen Transformator 16 auf ein lokales oder nationales Stromversorgungsnetz gegeben werden kann.

Die Ausgangsleistung der Gasturbinenanlage an den Generatorklemmen ist einer der hauptsächlichen Steuerparameter der Kraftwerksanlage. Wenn die Gasturbine Teil einer sogenannten "Leistungsinsel" (engl. "power island") ist (Anm.: unter "Leistungsinsel" ist in diesem Zusammenhang ein isoliertes lokales, vom nationalen Netz getrenntes Netz mit begrenzter elektrischer Kapazität zu verstehen; typische Beispiele von Leistungsinseln sind Hüttenwerke, Papierfabriken oder Walzwerke), findet die Regelung der Gasturbine und ihr präziser und zuverlässiger Betrieb in einer Umgebung statt, die durch einen fortlaufenden Leistungsbedarf der einzelnen, oft schwankenden Verbraucher auf der Leistungsinsel charakterisiert ist. In einer solchen komplexen Umgebung erfordert die Regelung der Gasturbine eine besondere Aufmerksamkeit.

Während die effiziente und genaue Regelung einer Gasturbinenanlage in einem im allgemeinen "steifen" nationalen Netz bereits eine Herausforderung darstellt, steigen die Anforderungen , wenn eine vergleichsweise kleineres, isoliertes lokales Netz mit einzelnen Verbrauchern und angeschlossenen kritischen Prozessen betrieben und am Leben erhalten werden soll.

Insbesondere erfordert die Regelung der Gasturbinenanlage während schneller Übergangsphasen mit potentiellen Netzfrequenzschwankungen verbesserte und weiterentwickelte Regelungsstrategien für moderne Gasturbinenanlagen.

Eine spezielle Anforderung an die Gasturbinenregelung in isolierten Leistungsinseln mit potentiellen Netzfrequenzschwankungen ergibt sich aus der Tatsache, dass die aktive Leistung an den Generatorklemmen ($P_{GENO}$) zusätzlich zur thermischen Leistung ($P_{GT}$) der Gasturbine eine kinetische Leistung ($P_{KINETIC}$) umfasst, die proportional sowohl zur zeitlichen Ableitung der Netzfrequenz ($dn/dt$) als auch zum gesamten Trägheitsmoment ($J_{ISLAND}$) der während eines solchen Ereignisses an der Insel hängenden Verbraucher ist.

Aus der Druckschrift US-A1-2005/0131616 ist eine Vorrichtung zur Berechnung der mechanischen Ausgangsleistung einer Gasturbine bekannt, bei der mittels eines Wattmeters und eines Tachometers die elektrische Leistung an den Generatorklemmen und die Drehzahl der Turbine gemessen werden, und aus den beiden Grössen mittels einer Gleichung die mechanische Ausgangsleistung der Turbine berechnet wird. Diese Lösung ist auf eine Messung an den Generatorklemmen angewiesen und kann daher in Fällen, in denen diese Messung nicht durchgeführt werden kann, nicht schnell genug ist, oder durch Störungen verfälscht ist, nicht angewendet werden. Dies ist insbesondere bei den o.g. Leistungsinseln der Fall.

Es ist aus der EP-A1-0 903 469 ein Verfahren zur Regelung der Leistung einer Turbogruppe bekannt, bei welchem die von dem Generator abgegebene Leistung bestimmt und die thermische Leistung der Turbine in Abhängigkeit von der gemessenen elektrischen Leistung des Generators geregelt wird, wobei zusätzlich die von der Welle aufgenommene bzw. abgegebene kinetische Leistung bestimmt wird und die thermische Leistung nach Massgabe der Summe aus der elektrischen Leistung und der kinetischen Leistung geregelt wird. Die elektrische Leistung kann dabei insbesondere aus der Drehfrequenz der Welle und dem an der Welle angreifenden Drehmoment berechnet werden. Auch diese Lösung ist für Leistungsinseln nicht geeignet.

DARSTELLUNG DER ERFINDUNG

Es ist Aufgabe der Erfindung, ein Verfahren zum Betrieb einer Gasturbine sowie eine Gasturbine zur Durchführung des Verfahrens anzugeben, welche die Nachteile bekannter Lösungen vermeiden und insbesondere für in Leistungsinseln eingesetzte Anlagen geeignet sind.

Die Aufgabe wird durch die Gesamtheit der Merkmale der Ansprüche 1 und 10 gelöst. Wesentlich für die Erfindung ist, dass einer oder mehrere der folgenden Parameter der Gasturbine, nämlich

- die Umgebungstemperatur,
- die Verdichtereinlass-Temperatur,
- die Verdichterauslass-Temperatur,
- die Turbinenauslass-Temperatur,
- der Umgebungsluftdruck,
- der totale oder statische absolute oder Überdruck am Verdichterauslass,
- der totale oder statische absolute oder Überdruck am Turbineneinlass,
- der Druckverlust zwischen Verdichterauslass und Turbineneinlass,
- die Drehzahl der Gasturbine oder die Frequenz des Stromversorgungsnetzes,
- der gemessene oder vorgegebene Massenfluss des der Brennkammer zugeführten Brennstoffs, und
- der untere Heizwert des Brennstoffs

gemessen bzw. bestimmt werden, dass aus den gemessenen bzw. bestimmten Parametern die effektive thermische Ausgangsleistung der Gasturbine berechnet wird, und dass die berechnete effektive thermische Ausgangsleistung zur Steuerung der Gasturbine herangezogen wird. Dabei wird die effektive thermische Ausgangsleistung der Gasturbine nach Massgabe der Gleichung

$$P_{GT} \propto f1(p_3) \cdot f2(m_{fuel}) \cdot f3(LHV) \cdot f4(n_{GT}) \cdot f5(T_2)$$

berechnet, wobei f1 ,..,f5 für den jeweiligen Fall zu bestimmende Funktionen sind, $p_3$ der Verdichterauslass-Druck ist, $m_{fuel}$ der Brennstoff-Massenfluss ist, LHV der untere Heizwert des Brennstoffs ist, $n_{GT}$ die Drehzahl der Gasturbine ist, und $T_2$ die Verdichtereinlass-Temperatur ist.

Gemäss einer Ausgestaltung der Erfindung umfasst der Verdichter variable Einlass-Leitschaufeln, und wird die Stellung der variablen Einlass-Leitschaufeln als weiterer Parameter bei der Berechnung der effektiven thermischen Ausgangsleistung berücksichtigt.

Eine andere Ausgestaltung der Erfindung ist dadurch gekennzeichnet, dass der Gasturbine an einer beliebigen Stelle ein Kühlmedium, insbesondere Wasser oder Dampf, zugeführt wird, und dass der Massenfluss des Kühlmediums als weiterer Parameter bei der Berechnung der effektiven thermischen Ausgangsleistung berücksichtigt wird.

Insbesondere kann dabei in der Gleichung anstelle der Verdichtereinlass-Temperatur die Umgebungstemperatur als Variable verwendet werden.

Eine bevorzugte Weiterbildung ist dadurch gekennzeichnet, dass zur Berücksichtigung von Alterungseffekten und anderen Änderungen in der Gasturbine zu bestimmten Zeitpunkten die effektive thermische Ausgangsleistung der Gasturbine gemessen wird, und dass die in der Gleichung auftretenden Koeffizienten durch Vergleich mit der berechneten effektiven thermischen Ausgangsleistung angepasst werden. Weiterhin kann auch der untere Heizwert des Brennstoffs in der Gleichung von Zeit zu Zeit angepasst werden.

Eine weitere Ausgestaltung der Erfindung zeichnet sich dadurch aus, dass die effektive thermische Ausgangsleistung der Gasturbine fortlaufend gemessen wird, dass für die Regelung der Gasturbine wahlweise der gemessene oder berechnete Wert der effektiven thermischen Ausgangsleistung verwendet wird, und dass die Regelung der Gasturbine je nach Zustand der Gasturbine und des Stromversorgungsnetzes automatisch von einem auf den anderen Wert umgestellt wird.

Insbesondere kann dabei zur Regelung der Gasturbine der gemessene Wert der effektiven thermischen Ausgangsleistung verwendet werden, wenn sich die Gasturbine in einem eingeschwungenen Betriebszustand befindet, und der berechnete Wert der effektiven thermischen Ausgangsleistung verwendet werden, wenn sich die Gasturbine in einem sich schnell ändernden Übergangszustand befindet und/oder das Stromversorgungsnetz instabil ist.

Eine Ausgestaltung der erfindungsgemässen Gasturbine ist dadurch gekennzeichnet, dass der Verdichter variable Einlass-Leitschaufeln umfasst, und dass am Verdichter ein mit der Regelung verbundener Messwertaufnehmer zur Aufnahme der Stellung der variablen Einlass-Leitschaufeln angeordnet ist.

Eine andere Ausgestaltung zeichnet sich dadurch aus, dass an der Gasturbine Vorrichtungen zur Kühlung der Gasturbine mittels eines Kühlmediums vorgesehen sind, und dass an der Gasturbine ein mit der Regelung verbundener Messwertaufnehmer zur Messung des Massenstroms des Kühlmediums angeordnet ist.

Gemäss einer weiteren Ausgestaltung der Erfindung sind an den Klemmen des Generators mit der Regelung verbundene Mittel zur Messung der an den Generatorklemmen abgegebenen Leistung angebracht.

Die Erfindung ist dabei nicht auf eine Gasturbine gemäss hier erfolgter Beschreibung und Figur eingeschränkt, sondern sie deckt auch Gasturbinen mit einer sequentiellen Befeuerung, wie dies aus EP-B1-0620362 hervorgeht. Diese ganze Druckschrift bildet dabei einen integrierenden Bestandteil dieser Anmeldung.

KURZE ERLÄUTERUNG DER FIGUREN

Die Erfindung soll nachfolgend anhand von Ausführungsbeispielen im Zusammenhang mit der Zeichnung näher erläutert werde. Die einzige Figur zeigt ein Schaltschema einer Gasturbine mit Regelung gemäss einem bevorzugten Ausführungsbeispiel der Erfindung.

WEGE ZUR AUSFÜHRUNG DER ERFINDUNG

Die Erfindung geht aus von der Tatsache, dass - wie bereits weiter oben erwähnt - die aktive Leistung an den Generatorklemmen ($P_{GENO}$) zusätzlich zur thermischen Leistung ($P_{GT}$) der Gasturbine eine kinetische Leistung ($P_{KINETIC}$) umfasst, die proportional sowohl zur zeitlichen Ableitung der Netzfrequenz ($dn/dt$) als auch zum gesamten Trägheitsmoment ($J_{ISLAND}$) der während eines solchen Ereignisses an der Insel hängenden Verbraucher ist.
Da das Trägheitsmoment wegen der praktisch unbegrenzten Kombinationsmöglichkeiten der einzelnen Verbraucher nur schwer vorherzusagen ist, ist es einfacher, die effektive thermische Leistung ($P_{GT}$) durch geeignete physikalisch-mathematische Methoden als Eingangsgrösse für das Regelungssystem der Gasturbine zu bestimmen.
Der physikalische Ansatz zur Beschreibung der oben genannten transienten Effekte bedient sich der nachfolgenden Gleichung:

$$(1) \qquad P_{GENO} = P_{GT} + P_{KINETIC} = P_{GT} + 4\pi^2 \cdot J_{ISLAND} \cdot n \cdot \left(\frac{dn}{dt}\right)$$

wobei die Gleichung für den eingeschwungenen Zustand vereinfacht werden kann zu

$$(2) \qquad P_{GENO} = P_{GT} .$$

Das vorgeschlagene Verfahren basiert auf der Bestimmung der effektiven thermischen Ausgangsleistung der Gasturbine mittels verschiedener gemessener charakteristischer Parameter. Unter Berücksichtigung der Thermodynamik eines offenen Gasturbinen-Kreisprozesses (Joule-Brayton-Kreisprozess) folgt die thermische Ausgangsleistung einer Gasturbine in einfachen Grössen der Beziehung

$$(3) \qquad P_{GT} \propto m_{exh} \cdot (h_6 - h_7) ,$$

wobei sich die Indizes "6" und "7" auf die Bedingungen am Turbineneinlass (21) und Turbinenauslass (22) beziehen.
Im Falle einer idealisierten ungekühlten Turbine repräsentiert die Grösse $m_{exh}$ den totalen durch die Turbine (12) hindurchgehenden Abgasmassenstrom, während die Einlassenthalpie $h_6$ mit der Turbineneinlass-Temperatur (TIT) gemäss dem internationalen Standard ISO 2314:1989 verknüpft ist.
Geht man von einer konstruierten Gasturbine mit einem fest vorgegebenen Schluckvermögen und einem definierten Betriebskonzept aus, ist der Betriebsbereich der Gasturbine folgerichtig festgelegt, und die thermische Ausgangsleistung der Gasturbine kann durch eine mathematische Funktion der folgenden Art angenähert werden:

$$(4) \qquad P_{GT} \propto f1(p_3) \cdot f2(m_{fuel}) .$$

Der Verdichterauslass-Druck $p_3$ in der Gleichung (4) ist direkt verknüpft mit dem Abgasmassenstrom $m_{exh}$, während der Brennstoffmassenstrom $m_{fuel}$ ein geeignetes Mass für den Feuerungsgrad der Gasturbine, d.h. für die Einlassenthalpie $h_6$ aus Gleichung (3) darstellt.
Um mögliche Schwankungen im unteren Heizwert (LHV) des Brennstoffes auszugleichen, kann die Gleichung (4) wie folgt erweitert werden:

$$(5) \qquad P_{GT} \propto f1(p_3) \cdot f2(m_{fuel}) \cdot f3(LHV).$$

Wenn weiterhin Schwankungen in der Netzfrequenz (die äquivalent zur relativen Änderung in der Rotorgeschwindigkeit der Gasturbine sind) ausgeglichen werden sollen und Änderungen in der Umgebungstemperatur berücksichtigt werden sollen, ergibt sich aus der Gleichung (5) schliesslich die folgende Gleichung:

$$(6) \qquad P_{GT} \propto f1(p_3) \cdot f2(m_{fuel}) \cdot f3(LHV) \cdot f4(n_{GT}) \cdot f5(T_1).$$

Wird die Umgebungstemperatur $T_1$ durch die Verdichtereinlass-Temperatur $T_2$ ersetzt, folgt schliesslich:

$$(7) \qquad P_{GT} \propto f1(p_3) \cdot f2(m_{fuel}) \cdot f3(LHV) \cdot f4(n_{GT}) \cdot f5(T_2).$$

Die letztgenannte Gleichung (7) kann als sogenannte "Leistungsformel" bezeichnet werden.

Die am meisten geeignete Struktur der Funktionen f1,..,f5 in Gleichung (7) folgt aus der spezifischen Betriebscharakteristik der jeweiligen Gasturbine und muss individuell auf der Basis entweder von geeigneten Berechnungen des Kreisprozesses oder von direkten Messungen an der Gasturbine bestimmt werden.

Wenn die Funktionen f1,..,f5 der Gleichung (7) in geeigneter Weise definiert sind, kann die Korrelation für die effektive thermische Leistung gemäss Gleichung (6) oder (7) auf einfache Weise in das Regelungssystem der Gasturbine eingebunden werden, in dem die folgenden Parameter einzeln oder in Kombination gemessen und in der Regelung der Gasturbine verarbeitet werden:

- die Umgebungstemperatur $T_1$,
- die Verdichtereinlass-Temperatur $T_2$,
- die Verdichterauslass-Temperatur,
- die Turbinenauslass-Temperatur,
- der Umgebungsluftdruck,
- der totale oder statische absolute oder Überdruck $p_3$ am Verdichterauslass 19,
- der totale oder statische absolute oder Überdruck am Turbineneinlass 21,
- der Druckverlust zwischen Verdichterauslass 19 und Turbineneinlass 21,
- die Drehzahl $n_{GT}$ der Gasturbine 10 oder die Frequenz des Stromversorgungsnetzes,
- die Position der variablen Einlass-Leitschaufeln VIGV des Verdichters 11,
- der gemessene oder vorgegebene Massenstrom $m_{fuel}$ des der Brennkammer 15 zugeführten Brennstoffs,
- der gemessene oder vorgegebene Massenstrom des Wassers oder Dampfs, wenn dieses bzw. dieser zusätzlich in eine Komponente der Gasturbine injiziert wird; und
- der untere Heizwert (LHV) des Brennstoffs auf der Basis z.B. eines Online-Gaschromatographen (GC).

Um entsprechende Parameterwerte für die Regelung 17 bereitzustellen, sind gemäss der Figur in der Gasturbine 10 verteilt verschiedene Messwertaufnehmer 23,..,32 vorgesehen, die mit der Regelung 17 verbunden sind:

- der Messwertaufnehmer 23 ist für die Stellung der variablen Einlass-Leitschaufeln VIGV des Verdichters 11 vorgesehen;
- die Messwertaufnehmer 24 am Verdichtereinlass 18 sind für den Druck und/oder die Temperatur am Verdichtereinlass 18 vorgesehen;
- der Messwertaufnehmer 25 ist für die Umgebungstemperatur $T_1$ und/oder den Umgebungsluftdruck vorgesehen;
- der Messwertaufnehmer 26 an der Brennstoffzufuhr 20 misst den Brennstoffmassenstrom $m_{fuel}$;
- der Messwertaufnehmer 27 an der Brennstoffzufuhr 20 ist beispielsweise als Gaschromatograph ausgebildet und misst den unteren Heizwert LHV des Brennstoffes;
- der am Turbineneinlass 21 angeordnete Messwertaufnehmer 28 misst den Turbineneinlass-Druck;
- der am Turbinenauslass 22 angeordnete Messwertaufnehmer 29 ist für die Messung der Turbinenauslass-Temperatur vorgesehen;
- der an der Welle 14 angeordnete Messwertaufnehmer 30 nimmt die Drehzahl der Welle 14 auf;
- der an der Kühlmediumzufuhr 34 angeordnete Messwertaufnehmer 31 misst den Massenstrom des Kühlmediums;
- die am Verdichterauslass 19 vorgesehenen Messwertaufnehmer 32 messen die Verdichterauslass-Temperatur und den Verdichterauslass-Druck; und

- der an den Generatorklemmen angeordnete Messwertaufnehmer misst die elektrische Leistung an den Generatorklemmen.

Aus den eingehenden Messwerten berechnet die Regelung nach Massgabe der Gleichung (6) oder (7) die effektive thermische Leistung der Gasturbine 10 und leitet daraus Steuersignale ab, die am Regelungsausgang 35 zur Regelung der Gasturbine 10 in an sich bekannter Weise abgegeben werden.

Im Rahmen der Erfindung kann es von Vorteil sein; wenn die "Leistungsformel" gemäss Gleichung (6) oder (7) an dauerhafte oder zeitweise Veränderungen in der Gasturbine 10 laufend angepasst wird (Online-Anpassung). So ist es schwierig, Alterungseffekte und den thermischen Zustand der Gasturbine in die "Leistungsformel" von vornherein aufzunehmen. Die berechnete Leistung wird daher nicht exakt dieselbe sein, wie die mittels des Messwertaufnehmers 33 gemessene Leistung. Hier kann Abhilfe geschaffen werden, indem die Koeffizienten der "Leistungsformel" automatisch online verändert werden, um die gemessene mit der berechneten Leistung in Übereinstimmung zu bringen.

Für den Fall, dass der untere Heizwert LHV des Brennstoffes nicht mittels eines Gaschromatographen online gemessen wird, oder die Verzögerungszeit des Gaschromatographen zu lang ist, ist es praktisch, den unteren Heizwert LHV in der "Leistungsformel" entsprechend anzupassen.

Wenn sich die Gasturbine 10 in einem eingeschwungenen oder Gleichgewichtszustand befindet, ist die an den Generatorklemmen gemessene Leistung von hoher Genauigkeit. Wenn sich dagegen die Gasturbine 10 in einem sich schnell ändernden transienten Betriebszustand befindet, oder wenn das Netz instabil ist, ist die Ungenauigkeit der gemessenen Leistung gross. Diese Ungenauigkeit kann folgende Gründe haben:

- die mangelnde Dynamik der Leistungsmessung (d.h. die Messung ist nicht schnell genug);
- und/oder die kinetische Leistung des Leistungsstranges.

In diesen Fällen kann die berechnete Leistung anstelle der gemessenen Leistung für die Regelung der Gasturbine 10 verwendet werden. Es kann eine automatische Umschaltung in der Regelung 17 vorgesehen werden, um nach Massgabe des Betriebszustandes der Gasturbine 10 und des Netzes den geeigneten Leistungswert (gemessen oder berechnet) zu verwenden.

Das beschriebene Verfahren kann nicht nur bei Leistungsinseln mit Vorteil eingesetzt werden, sondern generell in folgenden Situationen:

1. Die aktive Leistung der Gasturbine an den Generatorklemmen ($P_{GENO}$) kann nicht direkt gemessen werden. Dies ist insbesondere der Fall bei

   a. einem Gasturbinenbetrieb zur Unterstützung einer Leistungsinsel, d.h. insbesondere während schneller transienter Betriebszustände und/oder Netzfrequenzschwankungen;
   b. Gasturbinenbetrieb in einem Kombikraftwerk mit einer Ein-Wellen-Konfiguration.

2. Die Messung der aktiven Leistung an den Generatorklemmen ($P_{GENO}$) ist nicht schnell genug.
3. Die Messung der aktiven Leistung an den Generatorklemmen ($P_{GENO}$) ist gestört.

Insgesamt ergibt sich mit der Erfindung ein Gasturbinenbetrieb, bei welchem die Regelung sowohl im eingeschwungenen Zustand als auch bei transienten Betriebszuständen verbessert ist und die Verfügbarkeit und Zuverlässigkeit insbesondere der kritischen lokalen isolierten Netze ("Leistungsinseln") erhöht wird.

BEZUGSZEICHENLISTE

| 10 | Gasturbine |
|----|-----------|
| 11 | Verdichter |
| 12 | Turbine |
| 13 | Generator |
| 14 | Welle |
| 15 | Brennkammer |
| 16 | Transformator |
| 17 | Regelung |
| 18 | Verdichtereinlass |
| 19 | Verdichterauslass |

| | |
|---|---|
| 20 | Brennstoffzufuhr |
| 21 | Turbineneinlass |
| 22 | Turbinenauslass |
| 23,..,33 | Messwertaufnehmer |
| 34 | Kühlmediumzufuhr |
| 35 | Regelungsausgang |

**Patentansprüche**

1. Verfahren zum Betrieb einer Gasturbine (10), welche insbesondere in ein lokales isoliertes Stromversorgungsnetz Energie einspeist, und welche einen Verdichter (11) zur Verdichtung von aus der Umgebung angesaugter Verbrennungsluft, eine Brennkammer (15) zur Verbrennung von zugeführtem Brennstoff mittels der verdichteten Verbrennungsluft, eine von dem Heissgas aus der Brennkammer (15) angetriebene Turbine (12) und einen von der Turbine (12) angetriebenen Generator (13) zur Erzeugung elektrischer Leistung umfasst, wobei einer oder mehrere der folgenden Parameter der Gasturbine, nämlich

   - die Umgebungstemperatur ($T_1$),
   - die Verdichtereinlass-Temperatur ($T_2$),
   - die Verdichterauslass-Temperatur,
   - die Turbinenauslass-Temperatur,
   - der Umgebungsluftdruck,
   - der totale oder statische absolute oder Überdruck ($p_3$) am Verdichterauslass (19),
   - der totale oder statische absolute oder Überdruck am Turbineneinlass (21),
   - der Druckverlust zwischen Verdichterauslass (19) und Turbineneinlass (21),
   - die Drehzahl ($n_{GT}$) der Gasturbine (10) oder die Frequenz des Stromversorgungsnetzes,
   - der gemessene oder vorgegebene Massenfluss ($m_{fuel}$) des der Brennkammer (15) zugeführten Brennstoffs, und
   - der untere Heizwert (LHV) des Brennstoffs

   gemessen bzw. bestimmt werden, aus den gemessenen bzw. bestimmten Parametern die effektive thermische Ausgangsleistung ($P_{GT}$) der Gasturbine (10) berechnet wird, und die berechnete effektive thermische Ausgangsleistung ($P_{GT}$) zur Regelung der Gasturbine (10) herangezogen wird, **dadurch gekennzeichnet, dass** die effektive thermische Ausgangsleistung ($P_{GT}$) der Gasturbine (10) nach Massgabe der Gleichung

$$P_{GT} \propto f1(p_3) \cdot f2(m_{fuel}) \cdot f3(LHV) \cdot f4(n_{GT}) \cdot f5(T_2)$$

   berechnet wird, wobei f1,..,f5 für den jeweiligen Fall zu bestimmende Funktionen sind, $p_3$ der Verdichterauslass-Druck ist, $m_{fuel}$ der Brennstoff-Massenfluss ist, LHV der untere Heizwert des Brennstoffs ist, $n_{GT}$ die Drehzahl der Gasturbine (10) ist, und $T_2$ die Verdichtereinlass-Temperatur ist.

2. Verfahren nach Anspruch 1, **dadurch gekennzeichnet, dass** der Verdichter (11) variable Einlass-Leitschaufeln (VIGV) umfasst, und dass die Stellung der variablen Einlass-Leitschaufeln (VIGV) als weiterer Parameter bei der Berechnung der effektiven thermischen Ausgangsleistung ($P_{GT}$) berücksichtigt wird.

3. Verfahren nach Anspruch 1 oder 2, **dadurch gekennzeichnet, dass** der Gasturbine (10) an einer beliebigen Stelle (34) ein Kühlmedium, insbesondere Wasser oder Dampf, zugeführt wird, und dass der Massenfluss des Kühlmediums als weiterer Parameter bei der Berechnung der effektiven thermischen Ausgangsleistung ($P_{GT}$) berücksichtigt wird.

4. Verfahren nach Anspruch 1, **dadurch gekennzeichnet, dass** in der Gleichung anstelle der Verdichtereinlass-Temperatur ($T_2$) die Umgebungstemperatur ($T_1$) als Variable verwendet wird.

5. Verfahren nach Anspruch 1 oder 4, **dadurch gekennzeichnet, dass** zur Berücksichtigung von Alterungseffekten und anderen Änderungen in der Gasturbine (10) zu bestimmten Zeitpunkten die effektive thermische Ausgangsleistung ($P_{GT}$) der Gasturbine (10) gemessen wird, und dass die in der Gleichung auftretenden Koeffizienten durch Vergleich mit der berechneten effektiven thermischen Ausgangsleistung ($P_{GT}$) angepasst werden.

6. Verfahren nach Anspruch 5, **dadurch gekennzeichnet, dass** der untere Heizwert (LHV) des Brennstoffs in der Gleichung von Zeit zu Zeit angepasst wird.

7. Verfahren nach einem der Ansprüche 1 bis 6, **dadurch gekennzeichnet, dass** die effektive thermische Ausgangsleistung ($P_{GT}$) der Gasturbine (10) fortlaufend gemessen wird, dass für die Regelung der Gasturbine (10) wahlweise der gemessene oder berechnete Wert der effektiven thermischen Ausgangsleistung ($P_{GT}$) verwendet wird, und dass die Regelung der Gasturbine (10) je nach Zustand der Gasturbine (10) und des Stromversorgungsnetzes automatisch von einem auf den anderen Wert umgestellt wird.

8. Verfahren nach Anspruch 7, **dadurch gekennzeichnet, dass** zur Regelung der Gasturbine der gemessene Wert der effektiven thermischen Ausgangsleistung ($P_{GT}$) verwendet wird, wenn sich die Gasturbine (10) in einem eingeschwungenen Betriebszustand befindet, und dass der berechnete Wert der effektiven thermischen Ausgangsleistung ($P_{GT}$) verwendet wird, wenn sich die Gasturbine (10) in einem sich schnell ändernden Übergangszustand befindet und/oder das Stromversorgungsnetz instabil ist.

9. Gasturbine (10) umfassend einen Verdichter (11) zur Verdichtung von aus der Umgebung angesaugter Verbrennungsluft, eine Brennkammer (15) zur Verbrennung von zugeführtem Brennstoff mittels der verdichteten Verbrennungsluft, eine von dem Heissgas aus der Brennkammer (15) angetriebene Turbine (12) und einen von der Turbine (12) angetriebenen Generator (13) zur Erzeugung elektrischer Leistung, welche vorzugsweise in ein lokales isoliertes Stromversorgungsnetz eingespeist wird, wobei eine Regelung (17) zum Steuern des Betriebs der Gasturbine (10) vorgesehen ist, **dadurch gekennzeichnet, dass** an zugehörigen Stellen der Gasturbine (10) Messwertaufnehmer (23,..,33) für einen oder mehrere der folgenden Parameter, nämlich

   - die Umgebungstemperatur ($T_1$).
   - die Verdichtereinlass-Temperatur ($T_2$),
   - die Verdichterauslass-Temperatur,
   - die Turbinenauslass-Temperatur,
   - der Umgebungsluftdruck,
   - der totale oder statische absolute oder Überdruck ($p_3$) am Verdichterauslass (19),
   - der totale oder statische absolute oder Überdruck am Turbineneinlass (21),
   - der Druckverlust zwischen Verdichterauslass (19) und Turbineneinlass (21),
   - die Drehzahl ($n_{GT}$) der Gasturbine (10) oder die Frequenz des Stromversorgungsnetzes,
   - der gemessene oder vorgegebene Massenfluss ($m_{fuel}$) des der Brennkammer (15) zugeführten Brennstoffs, und
   - der untere Heizwert (LHV) des Brennstoffs

   vorgesehen sind, die mit der Regelung (17) verbunden sind, und dass die Regelung (17) zur Berechnung der effektiven thermischen Ausgangsleistung ($P_{GT}$) der Gasturbine (10) aus den von den Messwertaufnehmern (23,..,33) abgegebenen Daten ausgelegt ist, **dadurch gekennzeichnet, dass** die Regelung im Betrieb die effektive thermische Ausgangsleistung ($P_{GT}$) der Gasturbine (10) nach Massgabe der Gleichung

$$P_{GT} \propto f1(p_3) \cdot f2(m_{fuel}) \cdot f3(LHV) \cdot f4(n_{GT}) \cdot f5(T_2)$$

   berechnet, wobei f1,..,f5 für den jeweiligen Fall zu bestimmende Funktionen sind, $p_3$ der Verdichterauslass-Druck ist, $m_{fuel}$ der Brennstoff-Massenfluss ist, LHV der untere Heizwert des Brennstoffs ist, $n_{GT}$ die Drehzahl der Gasturbine (10) ist, und $T_2$ die Verdichtereinlass-Temperatur ist.

10. Gasturbine nach Anspruch 9, **dadurch gekennzeichnet, dass** der Verdichter (11) variable Einlass-Leitschaufeln (VIGV) umfasst, und dass am Verdichter (11) ein mit der Regelung (17) verbundener Messwertaufnehmer (23) zur Aufnahme der Stellung der variablen Einlass-Leitschaufeln (VIGV) angeordnet ist.

11. Gasturbine nach Anspruch 9 oder 10, **dadurch gekennzeichnet, dass** an der Gasturbine (10) Vorrichtungen (34) zur Kühlung der Gasturbine (10) mittels eines Kühlmediums vorgesehen sind, und dass an der Gasturbine (10) ein mit der Regelung verbundener Messwertaufnehmer (31) zur Messung des Massenstroms des Kühlmediums angeordnet ist.

**12.** Gasturbine nach einem der Ansprüche 9 bis 10, **dadurch gekennzeichnet, dass** an den Klemmen des Generators (13) mit der Regelung (17) verbundene Mittel (33) zur Messung der an den Generatorklemmen abgegebenen Leistung angebracht sind.

**13.** Gasturbine zur Durchführung des Verfahrens nach Anspruch 1, **dadurch gekennzeichnet, dass** die Gasturbine(10), im wesentlichen aus einer aus mindestens einem Verdichter (11) bestehenden Verdichtereinheit, aus einem stromab der Verdichtereinheit wirkenden ersten Brennkammer, aus einer stromab der ersten Brennkammer wirkenden ersten Turbine, aus einer stromab der ersten Turbine wirkenden zweiten Brennkammer, aus einer stromab der zweiten Brennkammer wirkenden zweiten Turbine besteht, wobei die erste und die zweite Brennkammer eine ringförmige Konfiguration aufweisen und wobei die zweite Brennkammer als selbstzündende Brennkammer ausgebildet ist.

**14.** Gasturbine nach Anspruch 13, **dadurch gekennzeichnet, dass** die zweite Brennkammer mit wirbelerzeugenden Elementen bestückt ist.

## Claims

**1.** Method for operating a gas turbine (1) which in particular feeds power to a locally isolated power supply network, and which comprises a compressor (11) for compressing combustion air drawn in from the environment, a combustion chamber (15) for combusting supplied fuel by means of the compressed combustion air, a turbine (12) driven by the hot gas stemming from the combustion chamber (15), and a generator (13) driven by the turbine (12) for producing electrical power, wherein one or more of the following parameters of the gas turbine is measured or determined:

- the ambient temperature ($T_1$),
- the compressor inlet temperature ($T_2$),
- the compressor outlet temperature,
- the turbine outlet temperature,
- the ambient air pressure,
- total or static absolute or positive pressure ($p_3$) at the compressor outlet (19),
- the total or static absolute or positive pressure at the turbine inlet (21),
- the pressure loss between the compressor outlet (19) and the turbine inlet (21),
- the rotation speed ($n_{GT}$) of the gas turbine (10) or the frequency of the power supply network,
- the measured or specified mass flow ($m_{fuel}$) of the fuel supplied to the combustion chamber (15), and
- the lower heating value (LHV) of the fuel,

the effective thermal output power ($P_{GT}$) of the gas turbine (10) is calculated from the measured or determined parameters, and the calculated effective thermal output power ($P_{GT}$) is used for regulating the gas turbine (10), **characterised in that** the effective thermal output power ($P_{GT}$) of the gas turbine (10) is calculated according to the equation

$$P_{GT} \propto f1(P_3) \cdot f2(m_{fuel}) \cdot f3(LHV) \cdot f4(n_{GT}) \cdot f5(T_2)$$

wherein $f_1, ..., f_5$ are functions to be determined for the respective case, $p_3$ is the compressor outlet pressure, $m_{fuel}$ is the fuel mass flow, LHV is the lower heating value of the fuel, $n_{GT}$ is the rotation speed of the gas turbine (10), and $T_2$ is the compressor inlet temperature.

**2.** Method according to claim 1, **characterised in that** the compressor (11) comprises variable inlet guide vanes (VIGV) and that the position of the variable inlet guide vanes (VIGV) is taken into account as a further parameter in calculation of the effective thermal output power ($P_{GT}$).

**3.** Method according to claim 1 or 2, **characterised in that** at an arbitrary point (34), a cooling medium, in particular water or steam, is supplied to the gas turbine (10), and that the mass flow of the cooling medium is taken into account as a further parameter in calculation of the effective thermal output power ($P_{GT}$).

4. Method according to claim 1, **characterised in that** the ambient temperature ($T_1$) is used as a variable in the equation instead of the compressor inlet temperature ($T_2$).

5. Method according to claim 1 or 4, **characterised in that** to take into account ageing effects and other changes in the gas turbine (10) at specific times, the effective thermal output power ($P_{GT}$) of the gas turbine (10) is measured and the coefficients occurring in the equation are adapted by comparison with the calculated effective thermal output power ($P_{GT}$).

6. Method according to claim 5, **characterised in that** the lower heating value (LHV) of the fuel in the equation is adapted from time to time.

7. Method according to any of claims 1 to 6, **characterised in that** the effective thermal output power ($P_{GT}$) of the gas turbine (10) is measured continuously, that optionally the measured or calculated value of the effective thermal output power ($P_{GT}$) is used for regulating the gas turbine (10), and that the regulation of the gas turbine (10) is automatically switched from one value to the other depending on the state of the gas turbine (10) and the power supply network.

8. Method according to claim 7, **characterised in that** the measured value of the effective thermal output power ($P_{GT}$) is used for regulating the gas turbine when the gas turbine is in a steady operating state, and that the calculated value of the effective thermal output power ($P_{GT}$) is used when the gas turbine (10) is in a rapidly changing transitional state and/or the power supply network is unstable.

9. Gas turbine (10) comprising a compressor (11) for compressing combustion air drawn in from the environment, a combustion chamber (15) for combusting supplied fuel by means of the compressed combustion air, a turbine (12) driven by the hot gas stemming from the combustion chamber (15), and a generator (13) driven by the turbine (12) for producing electrical power which is preferably fed into a locally isolated power supply network, wherein a regulator (17) is provided for controlling the operation of the gas turbine (10), **characterised in that** at associated points of the gas turbine (10), measurement value sensors (23, ..., 33) for one or more of the following parameters are provided:

- the ambient temperature ($T_1$),
- the compressor inlet temperature ($T_2$),
- the compressor outlet temperature,
- the turbine outlet temperature,
- the ambient air pressure,
- total or static absolute or positive pressure ($p_3$) at the compressor outlet (19),
- the total or static absolute or positive pressure at the turbine inlet (21),
- the pressure loss between the compressor outlet (19) and the turbine inlet (21),
- the rotation speed ($n_{GT}$) of the gas turbine (10) or the frequency of the power supply network,
- the measured or specified mass flow ($m_{fuel}$) of the fuel supplied to the combustion chamber (15), and
- the lower heating value (LHV) of the fuel,

which sensors are connected to the regulator (17), and that the regulator (17) is configured to calculate the effective thermal output power ($P_{GT}$) of the gas turbine (10) from the data output by the measurement value sensors (23, ..., 33), and that in operation, the regulator calculates the effective thermal output power ($P_{GT}$) of the gas turbine (10) according to the equation

$$P_{GT} \propto f1(P_3) \cdot f2(m_{fuel}) \cdot f3(LHV) \cdot f4(n_{GT}) \cdot f5(T_2)$$

wherein $f_1$, ..., $f_5$ are functions to be determined for the respective case, $p_3$ is the compressor outlet pressure, $m_{fuel}$ is the fuel mass flow, LHV is the lower heating value of the fuel, $n_{GT}$ is the rotation speed of the gas turbine (10), and $T_2$ is the compressor inlet temperature.

10. Gas turbine according to claim 9, **characterised in that** the compressor (11) comprises variable inlet guide vanes (VIGV) and that a measured value sensor (23) connected to the regulator (17) is arranged on the compressor (11) for sensing the position of the variable inlet guide vanes (VIGV).

**11.** Gas turbine according to claim 9 or 10, **characterised in that** devices (34) are provided on the gas turbine (10) for cooling the gas turbine (10) by means of a cooling medium, and that a measurement value sensor (31) connected to the regulator is arranged on the gas turbine (10) for measuring the mass flow of the cooling medium.

**12.** Gas turbine according to one of claims 9 to 10, **characterised in that** means (33) connected to the regulator (17) are arranged at the terminals of the generator (10) for measuring the power output at the generator terminals.

**13.** Gas turbine for performing the method according to claim 1, **characterised in that** the gas turbine (10) essentially comprises a compressor unit consisting of at least one compressor (11), a first combustion chamber acting downstream of the compressor unit, a first turbine acting downstream of the first combustion chamber, a second combustion chamber acting downstream of the first turbine, a second turbine acting downstream of the second combustion chamber, wherein the first and second combustion chambers have an annular configuration and wherein the second combustion chamber is configured as a self-igniting combustion chamber.

**14.** Gas turbine according to claim 13, **characterised in that** the second combustion chamber is equipped with eddy-generating elements.

**Revendications**

**1.** Procédé d'exploitation d'une turbine à gaz (10), qui introduit de l'énergie plus particulièrement dans un réseau d'alimentation local isolé et qui comprend un compresseur (11) pour la compression d'air de combustion aspiré dans l'environnement, une chambre de combustion (15) au moyen de l'air de combustion comprimé, une turbine (12) entraînée par le gaz chaud provenant de la chambre de combustion (15) et un générateur (13) entraîné par la turbine (12) pour la production d'une puissance électrique, un ou plusieurs des paramètres suivants de la turbine à gaz, à savoir :

- la température ambiante ($T_1$),
- la température à l'entrée du compresseur ($T_2$),
- la température à la sortie du compresseur,
- la température à la sortie de la turbine,
- la pression de l'air ambiant,
- la pression totale ou statique absolue ou la surpression ($p_3$) à la sortie du compresseur (19),
- la pression totale ou statique absolu ou la surpression à l'entrée de la turbine (21),
- la perte de pression entre la sortie du compresseur (19) et l'entrée de la turbine (21),
- la vitesse de rotation ($n_{GT}$) de la turbine à gaz (10) ou la fréquence du réseau d'alimentation électrique,
- le débit massique mesuré ou prédéterminé ($m_{fuel}$) du carburant introduit dans la chambre de combustion (15) et
- le pouvoir calorifique inférieur (LHV) du carburant,

sont mesurés ou déterminés, la puissance de sortie thermique efficace ($P_{GT}$) de la turbine à gaz (10) est calculée à partir des paramètres mesurés ou déterminés et la puissance de sortie thermique efficace ($P_{GT}$) calculée est utilisée pour la régulation de la turbine à gaz (10), **caractérisé en ce que** la puissance de sortie thermique efficace ($P_{GT}$) de la turbine à gaz (10) est calculée selon l'équation :

$$P_{GT} \propto f1(p_3) \cdot f2(m_{fuel}) \cdot f3(LHV) \cdot f4(n_{GT}) \cdot f5(T_2)$$

$f_1, ..., f_5$ étant des fonctions à déterminer pour chaque cas, $p_3$ étant la pression à la sortie du compresseur, $m_{fuel}$ le débit massique du carburant, LHV étant le pouvoir calorifique inférieur du carburant, $n_{GT}$ étant la vitesse de rotation de la turbine à gaz (10) et $T_2$ étant la température à l'entrée du compresseur.

**2.** Procédé selon la revendication 1, **caractérisé en ce que** le compresseur (11) comprend des aubes directrices d'entrée variables (VIGV) et **en ce que** la position des aubes directrices d'entrée variables (VIGV) est prise en compte en tant que paramètre supplémentaire lors du calcul de la puissance de sortie thermique efficace ($P_{GT}$).

**3.** Procédé selon la revendication 1 ou 2, **caractérisé en ce qu'**un fluide de refroidissement, plus particulièrement de l'eau ou de la vapeur est introduit à un endroit quelconque (34) de la turbine à gaz (10) et **en ce que** le débit massique du fluide de refroidissement est pris en compte en tant que paramètre supplémentaire lors du calcul de la puissance de sortie thermique efficace ($P_{GT}$).

4. Procédé selon la revendication 1, **caractérisé en ce que**, dans l'équation, au lieu de la température d'entré du compresseur ($T_2$), la température ambiante ($T_1$) est utilisée comme variable.

5. Procédé selon la revendication 1 ou 4, **caractérisé en ce que**, pour la prise en compte d'effets de vieillissement et d'autres modifications dans la turbine à gaz (10) à des moments déterminés, la puissance de sortie thermique efficace ($P_{GT}$) de la turbine à gaz (10) est mesurée et **en ce que** les coefficients apparaissant dans l'équation sont ajustés par une comparaison avec la puissance de sortie thermique efficace ($P_{GT}$) calculée.

6. Procédé selon la revendication 5, **caractérisé en ce que** le pouvoir calorifique inférieur (LHV) du carburant dans l'équation est ajusté de temps en temps.

7. Procédé selon l'une des revendications 1 à 6, **caractérisé en ce que** la puissance de sortie thermique efficace ($P_{GT}$) de la turbine à gaz (10) est mesurée en continu, **en ce que**, pour la régulation de la turbine à gaz (10), la valeur mesurée ou calculée de la puissance de sortie thermique efficace ($P_{GT}$) est utilisée et **en ce que** la régulation de la turbine à gaz (10) est automatiquement ajustée d'une valeur à une autre selon l'état de la turbine à gaz (10) et du réseau d'alimentation électrique.

8. Procédé selon la revendication 7, **caractérisé en ce que**, pour la régulation de la turbine à gaz, la valeur mesurée de la puissance de sortie thermique efficace ($P_{GT}$) est utilisée lorsque la turbine à gaz (10) se trouve dans un état de fonctionnement permanent et **en ce que** la valeur calculée de la puissance de sortie thermique efficace ($P_{GT}$) est utilisée lorsque la turbine à gaz (10) se trouve dans un état de transition à variation rapide et/ou le réseau d'alimentation électrique est instable.

9. Turbine à gaz (10) comprenant un compresseur (11) pour la compression d'air de combustion aspiré dans l'environnement, une chambre de combustion (15) pour la combustion de carburant introduit au moyen de l'air de combustion comprimé, une turbine (12) entraînée par le gaz chaud provenant de la chambre de combustion (15) et un générateur (13), entraîné par la turbine (12), pour la production d'une puissance électrique, qui est introduite de préférence dans un réseau d'alimentation électrique local isolé, une régulation (17) étant prévue pour la commande du fonctionnement de la turbine à gaz (10), **caractérisé en ce que**, à des endroits correspondants de la turbine à gaz (10), sont prévus des capteurs de valeurs de mesure (23, ..., 33), pour un ou plusieurs des paramètres suivants, à savoir :

- la température ambiante ($T_1$),
- la température à l'entrée du compresseur ($T_2$),
- la température à la sortie du compresseur,
- la température à la sortie de la turbine,
- la pression de l'air ambiant,
- la pression totale ou statique absolue ou la surpression ($p_3$) à la sortie du compresseur (19),
- la pression totale ou statique absolu ou la surpression à l'entrée de la turbine (21),
- la perte de pression entre la sortie du compresseur (19) et l'entrée de la turbine (21),
- la vitesse de rotation ($n_{GT}$) de la turbine à gaz (10) ou la fréquence du réseau d'alimentation électrique,
- le débit massique mesuré ou prédéterminé ($m_{fuel}$) du carburant introduit dans la chambre de combustion (15) et
- le pouvoir calorifique inférieur (LHV) du carburant,

qui sont reliés avec le dispositif de régulation (17) et **en ce que** le dispositif de régulation (17) est conçu pour le calcul de la puissance de sortie thermique efficace ($P_{GT}$) de la turbine à gaz (10) à partir des données générées par les capteurs de valeurs de mesure (23, ... 33), **caractérisé en ce que** le dispositif de régulation calcule, lors du fonctionnement, la puissance de sortie thermique efficace ($P_{GT}$) de la turbine à gaz (10) selon l'équation :

$$P_{GT} \propto f1(p_3) \cdot f2(m_{fuel}) \cdot f3(LHV) \cdot f4(n_{GT}) \cdot f5(T_2)$$

$f_1, ..., f_5$ étant des fonctions à déterminer pour chaque cas, $p_3$ étant la pression à la sortie du compresseur, $m_{fuel}$ le débit massique du carburant, LHV étant le pouvoir calorifique inférieur du carburant, $n_{GT}$ étant la vitesse de rotation de la turbine à gaz (10) et $T_2$ étant la température à l'entrée du compresseur.

10. Turbine à gaz selon la revendication 9, **caractérisée en ce que** le compresseur (1) comprend des aubes directrices d'entrée variables (VIGV) et **en ce que**, au niveau du compresseur (11), se trouve un capteur de valeur de mesure (23) relié avec le dispositif de régulation (17) pour l'enregistrement de la position des aubes directrices d'entrée variables (VIGV).

11. Turbine à gaz selon la revendication 9 ou 10, **caractérisée en ce que**, au niveau de la turbine à gaz (10), sont prévus des dispositifs (34) pour le refroidissement de la turbine à gaz (10) au moyen d'un fluide de refroidissement et **en ce que**, au niveau de la turbine à gaz (10), se trouve un capteur de valeur de mesure (31) relié avec le dispositif de régulation pour la mesure du débit massique du fluide de refroidissement.

12. Turbine à gaz selon l'une des revendications 9 à 10, **caractérisée en ce que**, au niveau de bornes du générateur (13), sont montés des moyens (33) reliés avec le dispositif de régulation (17), pour la mesure de la puissance produite au niveau des bornes du générateur.

13. Turbine à gaz pour la réalisation du procédé selon la revendication 1, **caractérisée en ce que** la turbine à gaz (10) est constituée essentiellement d'une unité de compresseur, qui est constituée d'au moins un compresseur (11), d'une première chambre de combustion agissant en aval de l'unité de compresseur, d'une première turbine agissant en aval de la première chambre de combustion, d'une deuxième chambre de combustion agissant en aval de la première turbine, d'une deuxième turbine agissant en aval de la deuxième chambre de combustion, la première et la deuxième chambres de combustion présentant une configuration annulaire et la deuxième chambre de combustion étant conçu comme une chambre de combustion à auto-allumage.

14. Turbine à gaz selon la revendication 13, **caractérisée en ce que** la deuxième chambre de combustion est équipée d'éléments générant des turbulences.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050131616 A1
- EP 0903469 A1

- EP 0620362 B1